# FASCICULE DE BREVET EUROPEEN

(11) **EP 2 963 590 B1**
(45) Date de publication et mention de la délivrance du brevet: **02.11.2016**
(21) Numéro de dépôt: 15306094.2
(22) Date de dépôt: 03.07.2015
(51) Int. Cl.: G06K 19/07

(54) **PROCÉDÉ DE FONCTIONNEMENT D'UN SYSTÈME D'ALARME ET/OU DE DOMOTIQUE ET SYSTÈME D'ALARME ET/OU DE DOMOTIQUE**
BETRIEBSVERFAHREN EINES ALARM- UND/ODER HEIMINSTALLATIONSSYSTEMS, UND ENTSPRECHENDES ALARM-UND/ODER HEIMINSTALLATIONS-SYSTEM
METHOD FOR OPERATING AN ALARM AND/OR HOME AUTOMATION SYSTEM AND ALARM AND/OR HOME AUTOMATION SYSTEM

(30) Priorité: 04.07.2014 FR 1456446
(43) Date de publication de la demande: 06.01.2016
(73) Titulaire: HAGER SECURITY (SAS), FR-38920 Crolles (FR)
(72) Inventeur: LAURENS, Gaston, 38530 Pontcharra (FR); HERBINIERE, Michel, 38330 St Nazaire les Eymes (FR)
(74) Mandataire: Nuss, Laurent

(56) Documents cités:
- EP-A2- 0 808 971
- FR-A1- 2 786 802
- US-A1- 2006 087 442
- US-A1- 2013 234 836

## Description

La présente invention concerne le domaine des systèmes d'alarme et/ou de domotique.

Les systèmes d'alarme pour la protection des personnes et des biens comprennent généralement différents appareils électroniques tels que des centrales, des détecteurs de présence à infrarouge, des détecteurs d'ouverture, des claviers de commande, des sirènes, des transmetteurs téléphoniques, qui peuvent être reliés par des fils et/ou par ondes radiofréquences.

Ces systèmes peuvent être complétés par des dispositifs électroniques portatifs, généralement dénommés des badges, qui, lorsqu' ils sont approchés d'un appareil électronique, par exemple d'un clavier extérieur ou de la centrale, permettent d'identifier l'utilisateur par l'envoi à distance d'un signal d'identification pour provoquer la désactivation du système sans que l'utilisateur ait besoin de composer un code d'accès.

Un système de contrôle d'accès d'un véhicule automobile comprenant un badge est connu du document EP 0 808 971 A2.

La présente invention a pour objet un perfectionnement aux systèmes électroniques d'alarme et/ou de domotique.

Selon un mode de réalisation, il est proposé un procédé de fonctionnement d'un système d'alarme et/ou de domotique comprenant au moins un appareil électronique qui comprend un circuit électronique pourvu de moyens d'émission/réception de signaux et au moins un dispositif électronique portatif comprenant un circuit électronique pourvu de moyens d'émission/réception de signaux et d'un capteur de vibration/mouvement apte à générer des signaux d'activation quand le dispositif portatif n'est pas immobile.

Selon le procédé proposé, le circuit électronique du dispositif portatif présente des phases actives engendrées par lesdits signaux d'activation issus dudit capteur de vibration/ mouvement et pendant lesquelles, uniquement, il est apte à émettre au moins un signal spécifique d'identification détectable par ledit appareil électronique.

Chaque phase active du circuit électronique du dispositif portatif peut présenter une durée prédéterminée suite à chaque signal d'activation et/ou se prolonge d'une durée prédéterminée après un dernier signal d'activation.

Pendant les phases actives, le circuit électronique du dispositif portatif peut émettre ledit signal spécifique d'identification uniquement à la suite d'un signal d'interrogation issu dudit appareil électronique.

Lorsqu'il reçoit le signal spécifique d'identification issu du dispositif portatif, l'appareil électronique peut modifier son état de fonctionnement.

Entre lesdites phases actives, l'alimentation électrique d'au moins certaines parties électroniques du dispositif portatif peut être coupée.

Il est également proposé un système d'alarme et/ou de domotique comprenant au moins un appareil électronique qui comprend un circuit électronique pourvu de moyens d'émission/réception de signaux et au moins un dispositif électronique portatif comprenant un circuit électronique pourvu de moyens d'émission/réception de signaux et d'un capteur de vibration/mouvement apte à générer des signaux d'activation quand le dispositif portatif n'est pas immobile, ledit appareil électronique comprenant en outre un clavier, ledit système étant apte pour la mise en oeuvre du procédé selon l'invention.

Des systèmes d'alarme et/ou de domotique vont maintenant être décrits à titre d'exemples non limitatifs illustrés par le dessin sur lequel :
- la figure 1 représente un schéma électronique de deux composants d'un système d'alarme et/ou de domotique ; et
- la figure 2 illustre des modes de fonctionnement du système d'alarme et/ou de domotique de la figure 1.

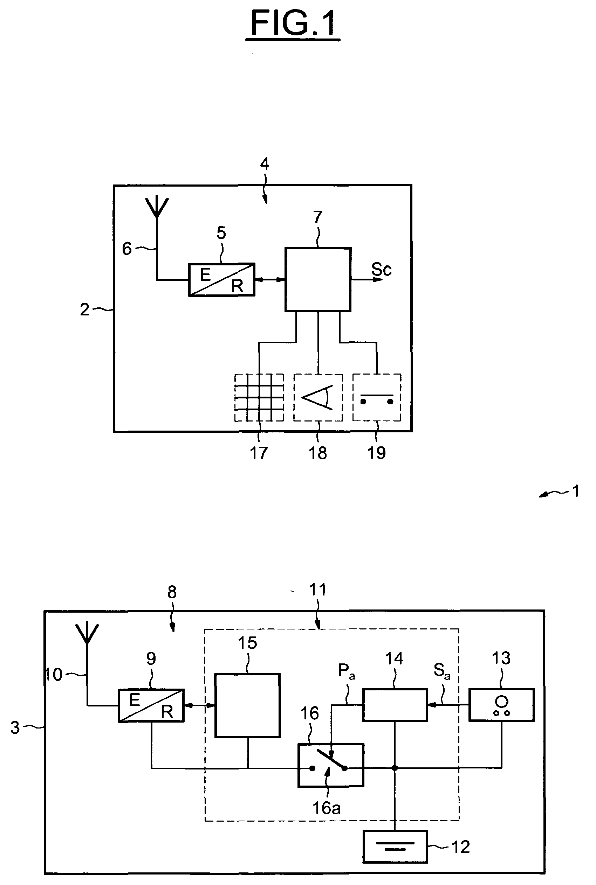

Comme illustré sur la figure 1, un système d'alarme et/ou de domotique 1 comprend un appareil électronique généralement fixe 2 et un dispositif électronique portatif 3, généralement dénommé un badge, aptes à communiquer entre eux sans fil par ondes radiofréquences, dans la mesure où ils sont mutuellement dans leurs champs de sensibilité électromagnétique.

L'appareil électronique fixe 2 comprend un circuit électronique 4 pourvu d'un circuit d'émission/réception de signaux 5 incluant une antenne 6 et d'un circuit de contrôle 7 apte à générer des signaux devant être émis par le circuit d'émission/réception de signaux 5 et apte à analyser des signaux reçus par ce circuit d'émission/réception de signaux 5 et générer des signaux de commande Sc.

Le dispositif électronique portatif 3 comprend un circuit électronique 8 pourvu d'un circuit d'émission/réception de signaux 9 incluant une antenne 10 et d'un circuit de contrôle 11 apte à générer des signaux devant être émis par le circuit d'émission/réception de signaux 9 et apte à analyser des signaux reçus par ce circuit d'émission/réception de signaux 9 et éventuellement générer des signaux de commande, ainsi qu'une source d'énergie électrique autonome 12 tel qu'une pile électrique.

Le dispositif électronique portatif 3 comprend en outre un capteur de vibration/mouvement 13 sensible aux vibrations et aux déplacements de ce dispositif électronique portatif 3 et apte à générer des signaux d'activation Sa quand le dispositif portatif électronique portatif 3 n'est pas immobile. A titre d'exemple, le capteur de vibration/mouvement 13 peut comprendre une bille métallique mobile apte à établir une liaison électrique entre deux contacts électriques, de façon à générer lesdits signaux d'activation notamment sous forme d'impulsions.

Le circuit de contrôle 11 comprend un circuit générateur 14 de phases actives Pa, par exemple un circuit bistable ou bascule, soumis au capteur de vibration/mouvement 13, et un microcontrôleur 15 relié au circuit d'émission/réception 9.

Le capteur de vibration/mouvement 13 et le circuit générateur 14 sont reliés à la source d'énergie électrique de façon à être alimentés en permanence en énergie électrique.

Le circuit de contrôle 11 comprend en outre un circuit de coupure 16, incluant par exemple au moins un interrupteur électronique 16a, commandé par une sortie du circuit générateur 14. Le circuit de coupure 16 est interposé entre d'une part la source d'énergie électrique 12 et d'autre part le circuit d'émission/réception 9 et le microcontrôleur 15.

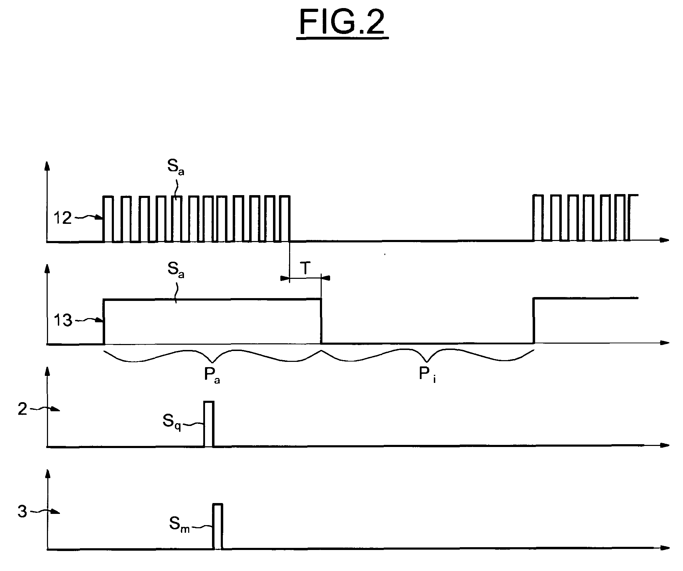

En référence notamment à la figure 2, on va maintenant décrire le fonctionnement du dispositif électronique portatif 3.

Le capteur de vibration/mouvement 13 et le circuit générateur 14 sont reliés à la source d'énergie électrique 12 de façon à être alimentés en permanence.

On suppose que le dispositif électronique portatif 3 est immobile. Alors, le capteur de vibration/mouvement 13 n'est pas sollicité et ne génère aucune impulsion. La sortie du circuit générateur 14 est dans un état inactif et le circuit de coupure 16 est à l'état « ouvert », de telle sorte que le circuit d'émission/réception 9 et le microcontrôleur 15 ne sont pas alimentés en énergie électrique et, en conséquence, ne consomment pas d'énergie électrique.

Si un utilisateur met en mouvement le dispositif électronique portatif 3, par le fait qu'il le prend et/ou le porte en bougeant, alors, le capteur de vibration/mouvement 13 est sollicité et génère des d'impulsions Sa, par exemple à chaque fois que sa bille touche ses contacts. Ces impulsions Sa sont envoyées au circuit générateur 14. La sortie de ce circuit générateur 14 passe de son état « inactif » à un état « actif » et génère une phase active Pa pendant laquelle le circuit de coupure 16 est placé et maintenu dans un état « fermé ». Le circuit d'émission/réception 9 et le microcontrôleur 15 sont en conséquence alimentés en énergie électrique.

Tant que l'utilisateur maintient en mouvement le dispositif électronique portatif 3, par le fait qu'il bouge, l'état de fonctionnement décrit ci- dessus est maintenu.

Si maintenant le dispositif électronique portatif 3 est immobilisé, par le fait que l'utilisateur l'a posé ou entreposé quelque part, alors, le capteur de vibration/ mouvement 13 n'est plus sollicité et cesse de générer des impulsions Sa après sa dernière impulsion délivrée. En l'absence d'une nouvelle impulsion pendant un délai prédéterminé programmé de temporisation T, la sortie du circuit générateur 14 passe de son état « actif » à un état « inactif » et place le circuit de coupure 16 de son état « fermé » à son état « ouvert » de telle sorte que le circuit d'émission/réception 9 et le microcontrôleur 15 cessent d'être alimentés en énergie électrique.

Si, à n'importe quel moment à la suite du délai de temporisation T, le capteur de vibration/ mouvement 13 est à nouveau sollicité par un utilisateur, le fonctionnement décrit ci-dessus se reproduit.

Il résulte de ce qui précède que le dispositif électronique portatif 3 présente deux états de fonctionnement.

D'une part, sous l'effet du capteur de vibration/ mouvement 13 résultant d'une sollicitation par un utilisateur, le circuit générateur 14 génère une phase active Pa pendant laquelle le dispositif électronique portatif 3 est complètement en état de fonctionnement de telle sorte que le circuit d'émission/réception 9 et le microcontrôleur 15 sont aptes à traiter des signaux reçus et aptes à émettre des signaux.

D'autre part, quand le capteur de vibration/ mouvement 13 n'est pas sollicité, le dispositif électronique portatif 3 est dans un état de fonctionnement limité ou dégradé correspondant à une phase inactive Pi pendant laquelle le circuit d'émission/réception 9 et le microcontrôleur 15 sont inactifs.

L'absence d'alimentation du circuit d'émission/réception de signaux 9 et du microcontrôleur 15 pendant ces phases inactives Pi permet d'économiser l'énergie contenue dans la source d'énergie électrique 12.

Selon une variante de réalisation, le circuit de contrôle 11 pourrait être implémenté différemment dans le but de réduire sa consommation d'énergie électrique en l'absence du signal de phase active Pa, tout en maintenant l'alimentation électrique du circuit d'émission/réception 9 et du microcontrôleur 15, en les plaçant à l'état de « mise en sommeil ».

L'appareil électronique fixe 2 peut constituer au moins en partie l'un quelconque des composants d'un système d'alarme ou de domotique 1. Différentes options de réalisation vont maintenant être décrites à titre d'exemples.

Selon une option de réalisation illustrée sur la figure 1, le circuit électronique 4 de l'appareil électronique fixe 2 peut être équipé d'un clavier 17 d'introduction manuelle d'un code d'accès par un utilisateur, relié au circuit de contrôle 7. Un mode de fonctionnement du système d'alarme 1 peut être le suivant.

Si un utilisateur, porteur du dispositif électronique portatif 3 qui est dans une phase active du fait qu'il bouge, s'approche du clavier 17 et sollicite une touche du clavier 17, alors, comme illustré sur la figure 2, le circuit de contrôle 7 génère un signal d'interrogation Sq qui est émis par l'intermédiaire du circuit d'émission/réception de signaux 5.

Le circuit d'émission/réception 9 du dispositif électronique portatif 3 capte le signal d'interrogation émis Sq sur le circuit d'émission/réception de signaux 9. Le signal d'interrogation Sq étant décodé par le circuit de contrôle 15, ce dernier génère, en réponse, un signal spécifique d'identification Sm qui est émis par l'intermédiaire du circuit d'émission/réception 9. Ce signal spécifique d'identification Sm est capté par le circuit d'émission/réception 5 de l'appareil électronique 2. Etant décodé par le circuit de contrôle 7, ce dernier peut alors générer un signal de commande Sc.

Il en résulte que ce signal de commande Sc ne peut être généré que si l'utilisateur porte le dispositif électronique portatif 3, se trouve à proximité du clavier 17 et a tapé sur une touche du clavier 17.

Selon une variante de réalisation, le signal de commande Sc ne pourrait être généré par le circuit de contrôle 7 que si, en plus, l'utilisateur compose manuellement un code complémentaire d'identification souhaité sur le clavier 17.

Selon un exemple de réalisation, l'appareil électronique fixe 2, équipé du clavier manuel 17, peut être inclus dans une centrale électronique. Dans ce cas, le signal de commande Sc peut être par exemple un signal de désactivation du système d'alarme, au moins partiellement.

Selon un autre exemple de réalisation, l'appareil électronique fixe 2, équipé du clavier 17, peut être un clavier électronique autonome, par exemple disposé à l'extérieur d'un local qui est surveillé par le système d'alarme 1. Dans ce cas, le circuit de contrôle 7 de l'appareil électronique fixe 2 envoie le signal de commande Sc au circuit d'émission/réception 5 en vue de son émission et dans le but qu'il soit capté par exemple par une centrale électronique du système d'alarme 1 et décodé comme étant par exemple un signal de désactivation au moins partielle du système d'alarme 1.

Selon une autre option de réalisation illustrée sur la figure 1, l'appareil électronique fixe 2 peut être équipé d'un détecteur de présence 18 par exemple à infrarouge, dans le but de constituer un appareil de surveillance volumétrique par exemple d'un local ou d'un endroit surveillés.

Si un utilisateur, porteur du dispositif électronique portatif 3, entre dans le champ de détection du détecteur de présence 18 de l'appareil électronique 2, alors, sous l'effet du signal de présence issu de ce détecteur 18, le circuit de contrôle 7 génère un signal d'interrogation Sq. Comme précédemment, ce signal d'interrogation Sq est envoyé au dispositif électronique portatif 3 qui à son tour envoie un signal spécifique d'identification Sm.

Selon une variante de réalisation, ce signal spécifique identification Sm peut être décodé par le circuit de contrôle 7 pour faire en sorte que comme décrit précédemment, sous l'effet d'un signal de commande Sc généré, le système d'alarme 1 ne déclenche pas une alarme et/ou désactive le système d'alarme 1 au moins partiellement.

Selon une autre option de réalisation illustrée sur la figure 1, l'appareil électronique fixe 2 peut être équipé d'un contact électrique 19, l'appareil électronique fixe 2 constituant par exemple un détecteur d'ouverture. Le fonctionnement d'un tel appareil électronique fixe 2 pourrait être le même que celui décrit ci-dessus dans le cas du détecteur de présence 18.

Selon une variante de réalisation pouvant être appliquée dans chacune des options décrites, le signal de sollicitation du clavier 17, le signal du capteur 18 ou le signal du contact électrique 19 peuvent être transmis à une centrale électronique du système d'alarme 1 via le circuit d'émission/réception 5. Ce pourrait être alors cette centrale électronique qui générerait le signal d'interrogation Sq et qui produirait le signal de commande Sc si elle reçoit en réponse le signal d'identification spécifique Sm issu du dispositif portatif 3.

Selon un exemple d'application, le signal de commande Sc peut être utilisé pour commander l'émission de signaux d'avertissement ou d'information lumineux et/ou sonores tels que des messages vocaux, par des mo yens équipant par exemple le dispositif électronique fixe 2 et/ou la centrale électronique du système d'alarme.

Selon un exemple d'application, le signal de commande Sc issu du circuit de contrôle 7 de l'appareil électronique fixe 2, ou issu d'une centrale électronique, peut être utilisé pour déclencher la mise en route d'un appareil domestique, par exemple d'un appareil de chauffage, ou l'actionnement d'un équipement, par exemple de volets, d'une porte automatique ou d'un portail automatique.

Il est également proposé un dispositif électronique portatif pour un système d'alarme et/ou de domotique, comprenant un circuit électronique qui comprend des moyens d'émission/réception de signaux 9, un capteur de vibration/ mouvement 13 apte à générer des signaux d'activation Sa quand le dispositif portatif n'est pas immobile, un circuit générateur 14 de phases actives Pa sous l'effet des signaux d'activation Sa issus dudit capteur de vibration/ mouvement 13, des moyens de contrôle 15 pour générer l'émission éventuelle d'au moins un signal spécifique d'identification Sm uniquement pendant lesdites phases actives Pa, et des moyens 16 pour couper l'alimentation électrique d'au moins certaines parties électroniques 9, 15 du dispositif portatif 3.

La présente invention ne se limite pas aux exemples ci-dessus décrits. En particulier, les différentes dispositions proposées pourraient être combinées, en fonction du système d'alarme et/ou de domotique souhaité. Bien des variantes de réalisation sont possibles sans sortir du cadre de l'invention.

## Revendications

1. Procédé de fonctionnement d'un système d'alarme et/ou de domotique comprenant au moins un appareil électronique (2) comprenant un circuit électronique pourvu de moyens d'émission/réception de signaux (5) et au moins un dispositif électronique portatif (3) comprenant un circuit électronique pourvu de moyens d'émission/réception de signaux (9) et d'un capteur de vibration/ mouvement (13) apte à générer des signaux d'activation (Sa) quand le dispositif portatif n'est pas immobile, ledit appareil électronique (2) comprenant en outre un clavier (17),
dans lequel le circuit électronique (8) du dispositif portatif (3) présente des phases actives (Pa) engendrées par lesdits signaux d'activation (Sa) issus dudit capteur de vibration/mouvement (13) et pendant lesquelles, uniquement, il est apte à émettre au moins un signal spécifique d'identification (Sm) détectable par ledit appareil électronique (2),
dans lequel, pendant les phases actives (Pa), le circuit électronique du dispositif portatif (3) émet ledit signal spécifique d'identification (Sm) uniquement à la suite d'un signal d'interrogation (Sq) issu dudit appareil électronique (2),
dans lequel, pendant les phases actives (Pa), lorsqu'une touche du clavier (17) est sollicitée, le circuit de contrôle (7) de l'appareil (2) génère le signal d'interrogation (Sq) qui est émis par les moyens d'émission/réception de signaux (5) de l'appareil (2).

2. Procédé selon la revendication 1, dans lequel chaque phase active (Pa) du circuit électronique du dispositif portatif (3) présente une durée prédéterminée suite à chaque signal d'activation et/ou se prolonge d'une durée prédéterminée (T) après un dernier signal d'activation.

3. Procédé selon l'une quelconque des revendications précédentes, dans lequel, lorsqu'il reçoit le signal spécifique d'identification (Sm) issu du dispositif portatif, l'appareil électronique (2) modifie son état de fonctionnement.

4. Procédé selon l'une quelconque des revendications précédentes, dans lequel, entre lesdites phases actives (Pa), l'alimentation électrique d'au moins certaines parties électroniques (9, 15) du dispositif portatif (3) est coupée.

5. Système d'alarme et/ou de domotique comprenant au moins un appareil électronique (2) qui comprend un circuit électronique pourvu de moyens d'émission/réception de signaux (5) et au moins un dispositif électronique portatif (3) comprenant un circuit électronique pourvu de moyens d'émission/réception de signaux (9) et d'un capteur de vibration/mouvement (13) apte à générer des signaux d'activation (Sa) quand le dispositif portatif (3) n'est pas immobile, ledit appareil électronique (2) comprenant en outre un clavier (17), ledit système étant adapté à la mise en oeuvre du procédé selon l'une quelconque des revendications 1 à 4.

6. Système d'alarme et/ou de domotique selon la revendication 5, **caractérisé en ce que** le dispositif électronique portatif (3) comprend en outre un circuit générateur (14) de phases actives (Pa) sous l'effet des signaux d'activation (Sa) issus dudit capteur de vibration/mouvement (13).

7. Système d'alarme et/ou de domotique selon l'une quelconque des revendications 5 ou 6, **caractérisé en ce que** le dispositif électronique portatif (3) comprend en outre des moyens de contrôle (15) pour générer l'émission éventuelle d'au moins un signal spécifique d'identification (Sm) uniquement pendant lesdites phases actives (Pa).

8. Système d'alarme et/ou de domotique selon l'une quelconque des revendications 5 à 7, **caractérisé en ce que** le dispositif électronique portatif (3) comprend en outre des moyens (16) pour couper l'alimentation électrique d'au moins certaines parties électroniques (9, 15) du dispositif portatif (3).

9. Système d'alarme et/ou de domotique selon l'une quelconque des revendications 5 à 8, **caractérisé en ce que** l'appareil électronique est un appareil électronique fixe.

10. Système d'alarme et/ou de domotique selon la revendication 9, **caractérisé en ce que** l'appareil électronique (2) fixe est équipé du clavier manuel (17) et est inclus dans une centrale électronique.

11. Système d'alarme et/ou de domotique selon la revendication 9, **caractérisé en ce que** le système est un système d'alarme, **en ce que** l'appareil électronique (2) fixe est équipé du clavier (17) et **en ce que** le clavier (17) est un clavier électronique autonome, qui est de préférence disposé à l'extérieur d'un local qui est surveillé par le système d'alarme (1).

## Patentansprüche

1. Betriebsverfahren eines Alarm- und/oder Heiminstallationssystems, das mindestens ein elektronisches Gerät (2), das eine elektronische Schaltung aufweist, die mit Mitteln zum Senden/Empfangen von Signalen (5) versehen ist, und mindestens eine tragbare elektronische Vorrichtung (3) aufweist, die eine elektronische Schaltung aufweist, die mit Mitteln zum Senden/Empfangen von Signalen (9) und einem Vibrations-/Bewegungssensor (13) versehen ist, der geeignet ist, Aktivierungssignale (Sa) zu erzeugen, wenn die tragbare Vorrichtung nicht bewegungslos ist, wobei das elektronische Gerät (2) ferner eine Tastatur (17) aufweist,
wobei die elektronische Schaltung (8) der tragbaren Vorrichtung (3) aktive Phasen (Pa) aufweist, die durch die Aktivierungssignale (Sa) erzeugt werden, die von dem Vibrations-/Bewegungssensor (13) abgegeben werden und nur während derer sie geeignet ist, mindestens ein spezifisches Identifikationssignal (Sm) zu senden, das von dem elektronischen Gerät (2) detektierbar ist,
wobei die elektronische Schaltung der tragbaren Vorrichtung (3) während der aktiven Phasen (Pa) das spezifische Identifikationssignal (Sm) nur in Folge eines Abfragesignals (Sq) sendet, das von dem elektronischen Gerät (2) abgegeben wird,
wobei die Kontrollschaltung (7) des Gerätes (2) während der aktiven Phasen (Pa), wenn eine Taste der Tastatur (17) betätigt wird, das Abfragesignal (Sq) erzeugt, das von den Mitteln zum Senden/Empfangen von Signalen (5) des Gerätes (2) gesendet wird.

2. Verfahren nach Anspruch 1,
wobei jede aktive Phase (Pa) der elektronischen Schaltung der tragbaren Vorrichtung (3) eine vorbestimmte Zeitdauer nach jedem Aktivierungssignal aufweist und/oder nach einem letzten Aktivierungssignal um eine vorbestimmte Zeitdauer (T) verlängert wird.

3. Verfahren nach einem der vorhergehenden Ansprüche,
wobei das elektronische Gerät (2), wenn es das spezifische Identifikationssignal (Sm) empfängt, das von der tragbaren Vorrichtung abgegeben wird, seinen Betriebszustand ändert.

4. Verfahren nach einem der vorhergehenden Ansprüche,
wobei die Stromversorgung von mindestens bestimmten elektronischen Bauteilen (9, 15) der tragbaren Vorrichtung (3) zwischen den aktiven Phasen (Pa) unterbrochen wird.

5. Alarm- und/oder Heiminstallationssystem, das mindestens ein elektronisches Gerät (2), das eine elektronische Schaltung aufweist, die mit Mitteln zum Senden/Empfangen von Signalen (5) versehen ist, und mindestens eine tragbare elektronische Vorrichtung (3) aufweist, die eine elektronische Schaltung aufweist, die mit Mitteln zum Senden/Empfangen von Signalen (9) und einem Vibrations-/Bewegungssensor (13) versehen ist, der geeignet ist, Aktivierungssignale (Sa) zu erzeugen, wenn die tragbare Vorrichtung nicht unbeweglich ist, wobei das elektronische Gerät (2) ferner eine Tastatur (17) aufweist, wobei das System geeignet ist, das Verfahren nach einem der Ansprüche 1 bis 4 durchzuführen.

6. Alarm- und/oder Heiminstallationssystem nach Anspruch 5,
**dadurch gekennzeichnet,**
**dass** die tragbare elektronische Vorrichtung (3) ferner eine Schaltung zum Erzeugen (14) von aktiven Phasen (Pa) unter der Wirkung von Aktivierungssignalen (Sa), die von dem Vibrations-/Bewegungssensor (13) abgegeben werden, aufweist.

7. Alarm- und/oder Heiminstallationssystem nach einem der Ansprüche 5 oder 6,
**dadurch gekennzeichnet,**
**dass** die tragbare elektronische Vorrichtung (3) ferner Kontrollmittel (15) aufweist, um das eventuelle Senden von mindestens einem spezifischen Identifikationssignal (Sm) nur während der aktiven Phasen (Pa) zu erzeugen.

8. Alarm- und/oder Heiminstallationssystem nach einem der Ansprüche 5 bis 7,
**dadurch gekennzeichnet,**
**dass** die tragbare elektronische Vorrichtung (3) ferner Mittel (16) aufweist, um die Stromversorgung von mindestens bestimmten elektronischen Bauteilen (9, 15) der tragbaren Vorrichtung (3) zu unterbrechen.

9. Alarm- und/oder Heiminstallationssystem nach einem der Ansprüche 5 bis 8,
**dadurch gekennzeichnet,**
**dass** das elektronische Gerät ein festes elektronisches Gerät ist.

10. Alarm- und/oder Heiminstallationssystem nach Anspruch 9,
**dadurch gekennzeichnet,**
**dass** das feste elektronische Gerät (2) mit einer manuellen Tastatur (17) ausgestattet ist und in einer elektronischen Zentrale enthalten ist.

11. Alarm- und/oder Heiminstallationssystem nach Anspruch 9,
**dadurch gekennzeichnet,**
**dass** das System ein Alarmsystem ist und dass das feste elektronische Gerät (2) mit einer Tastatur (17) ausgestattet ist und dass die Tastatur (17) eine autonome elektronische Tastatur ist, die vorzugsweise außerhalb eines Raums angeordnet ist, der von dem Alarmsystem (1) überwacht wird.

## Claims

1. Method for operating an alarm and/or home automation system comprising at least one electronic apparatus (2) comprising an electronic circuit provided with signal transmission/reception means (5) and at least one portable electronic device (3) comprising an electronic circuit provided with signal transmission/reception means (9) and a vibration/movement sensor (13) capable of generating activation signals (Sa) when the portable device is not stationary, said electronic apparatus (2) further comprising a keyboard (17),
wherein the electronic circuit (8) of the portable device (3) has active phases (Pa), which are generated by said activation signals (Sa) coming from said vibration/movement sensor (13) and only during which is it capable of transmitting at least one specific identification signal (Sm) that can be detected by said electronic apparatus (2),
wherein, during the active phases (Pa), the electronic circuit of the portable device (3) transmits said specific identification signal (Sm) only following a polling signal (Sq) coming from said electronic apparatus (2),
wherein, during the active phases (Pa), when a key of the keyboard (17) is used, the control circuit (7) of the apparatus (2) generates the polling signal (Sq) that is transmitted by the signal transmission/reception means (5) of the apparatus (2).

2. Method according to claim 1, wherein each active phase (Pa) of the electronic circuit of the portable device (3) has a predetermined duration following each activation signal and/or extends by a predetermined duration (T) after a last activation signal.

3. Method according to any one of the preceding claims, wherein, when it receives the specific identification signal (Sm) coming from the portable device, the electronic apparatus (2) changes its operating state.

4. Method according to any one of the preceding claims, wherein, between said active phases (Pa), the electric power supply of at least some electronic parts (9, 15) of the portable device (3) is cut off.

5. Alarm and/or home automation system comprising at least one electronic apparatus (2) that comprises an electronic circuit provided with signal transmission/reception means (5) and at least one portable electronic device (3) comprising an electronic circuit provided with signal transmission/reception means (9) and a vibration/movement sensor (13) capable of generating activation signals (Sa) when the portable device (3) is not stationary, said electronic apparatus (2) further comprising a keyboard (17), said system being adapted for implementing the method according to any one of claims 1 to 4.

6. Alarm and/or home automation system according to claim 5, **characterised in that** the portable electronic device (3) further comprises a circuit (14) for generating active phases (Pa) under the action of the activation signals (Sa) coming from said vibration/movement sensor (13).

7. Alarm and/or home automation system according to claim 5 or 6, **characterised in that** the portable electronic device (3) further comprises control means (15) for generating the possible transmission of at least one specific identification signal (Sm) only during said active phases (Pa).

8. Alarm and/or home automation system according to any one of claims 5 to 7, **characterised in that** the portable electronic device (3) further comprises means (16) for cutting off the electric power supply of at least some electronic parts (9, 15) of the portable device (3).

9. Alarm and/or home automation system according to any one of claims 5 to 8, **characterised in that** the electronic apparatus is a fixed electronic apparatus.

10. Alarm and/or home automation system according to claim 9, **characterised in that** the fixed electronic apparatus (2) is equipped with the manual keyboard (17) and is included in an electronic station.

11. Alarm and/or home automation system according to claim 9, **characterised in that** the system is an alarm system, **in that** the fixed electronic apparatus (2) is equipped with the keyboard (17) and **in that** the keyboard (17) is an autonomous electronic keyboard, which is preferably disposed outside a room that is monitored by the alarm system (1).
